## Europäisches Patentamt
## European Patent Office
## Office européen des brevets

(19)

(11) Veröffentlichungsnummer: **0 123 792**
**B1**

(12)

# EUROPÄISCHE PATENTSCHRIFT

(45) Veröffentlichungstag der Patentschrift:
04.01.89

(51) Int. Cl.⁴: **B 23 H 11/00**

(21) Anmeldenummer: **84100997.0**

(22) Anmeldetag: **01.02.84**

(54) **Funkenerosionsmaschine.**

(30) Priorität: **04.02.83 DE 3303758**

(43) Veröffentlichungstag der Anmeldung:
**07.11.84 Patentblatt 84/45**

(45) Bekanntmachung des Hinweises auf die Patenterteilung:
**04.01.89 Patentblatt 89/1**

(84) Benannte Vertragsstaaten:
**CH DE FR GB IT LI**

(56) Entgegenhaltungen:
**DE-A-2 514 899**

(73) Patentinhaber: **Schiess Aktiengesellschaft Geschäftsbereich Nassovia, Nassoviastrasse 2 Postfach 12 20, D-6070 Langen (Hessen) (DE)**

(72) Erfinder: **Dietz, Volker, Dipl.- Ing., Arnsburger Strasse 26, D-6304 Pohlheim 3 (DE)**
Erfinder: **Schäfer, Hans, Gartenstrasse 23, D-6070 Langen (DE)**

(74) Vertreter: **Allgeier, Kurt, Friedrichstrasse 24, D-7888 Rheinfelden (DE)**

EP 0 123 792 B1

**Beschreibung**

Die Erfindung betrifft eine Funkenerosionsmaschine mit einem C-förmigen Maschinengestell, bestehend aus einem vertikalen Maschinenständer, einem oberen Schenkel mit einer eine Werkzeugelektrode tragenden Vorschubeinrichtung und einem unteren, das Maschinenbett bildenden Schenkel sovie einer direkt auf dem Maschinenbett aufliegenden Aufspannplatte für das Werkstück, welche von einem offenen, mit einer dielektrischen Flüssigkeit befüllbaren Arbeitsbehälter umgeben ist.

Funkenerosionsmaschinen zum Senken, Schleifen oder Schneiden haben einen Arbeitskopf mit Vorschubeinrichtungen für die erforderlichen relativen Bewegungen der Werkzeugelektrode zum Werkstück. Das Werkstück liegt auf einer Aufspannplatte in dem Arbeitsbehälter für das Arbeitsmedium, welches eine dielektrische Flüssigkeit ist. In dem Behälter stehen sich das Werkstück (Werkstückelektrode) und die das Werkzeug bildende Werkzeugelektrode in der isolierenden Flüssigkeit (Arbeitsmedium) gegenüber.

Die in dem Arbeitsbehälter die Arbeitsstelle umgebende dielektrische Flüssigkeit wird gewöhnlich durch eine Pumpe umgewälzt oder unter Druck der Arbeitsstelle zugeführt bzw. durch Unterdruck aus dem Arbeitsbereich abgezogen. Zwischen dem Arbeitsbehälter und einem Vorratstank ist gewöhnlich eine geeignete Filteranlage geschaltet, um die Abtragsprodukte abzuscheiden.

Zum Aufspannen und Ausrichten des Werkstückes, zur Beobachtung des Arbeitsfortschrittes und zum Abspannen des Werkstückes ist es erforderlich, das Arbeitsmedium aus dem Arbeitsbehälter abzulassen, um eine gute Einsicht zu haben und ungehindert arbeiten zu können. Bei dem Bestreben, den Erosionsprozeß unbeaufsichtigt durchzuführen, wird die Forderung nach selbsttätigem bzw. automatischem Wechsel von Werkzeug und Werkstück gestellt. Beim Werkstückwechsel strebt man möglichst unkomplizierte Vorgänge an, die niemanden gefährden, der sich im Bereich der Maschine aufhält. Für den Werkstückwechsel läßt man normalerweise das Dielektrikum aus dem Arbeitsbehälter ab, öffnet diesen und tauscht die Werkstücke und ggfs. auch das Werkzeug aus. Anschließend wird dann das Dielektrikum wieder eingelassen.

Um den notwendigen Zugang zu der Arbeitsstelle zu erhalten, sind die Arbeitsbehälter mit Klapp- oder Schiebetüren versehen. Die Zugänglichkeit bei einer Schiebetüranordnung ist schlecht, wobei für automatisierte Arbeitsabläufe die Türverriegelungen motorisch geöffnet, die Türen verschwenkt bzw. verschoben und in bestimmte Stellungen gefahren werden müssen. Der Bereich, in den die Türen schwenken, muß abgesperrt werden, um nicht zufällig gegenwärtige Personen zu gefährden.

Arbeitsbehälter, bei denen beispielsweise die Vorderwand als Schiebetür ausgebildet und in horizontaler oder vertikaler Richtung verstellbar ist, ermöglichen eine etwas einfacherere Automatisierung zum Öffnen und Verschließen der Tür, bei einer derartigen Anordnung ergibt sich jedoch eine schlechtere Zugänglichkeit zur Arbeitsstelle.

Bei einer anderen bekannten Maschine sind alle vier Wände des Arbeitsbehälters im wesentlichen zu einem gemeinsamen Rahmen zusammengefaßt, der in vertikaler Richtung verschiebbar ist, woraus eine gute Zugänglichkeit und einfache Automatisierung resultiert. Da bei einem derartigen Hubbehälter der die vier Wände umfassende Rahmen rings um die Aufspannplatte reicht, muß diese Aufspannplatte auf Säulen gesetzt werden, die mindestens so hoch sind, wie der Arbeitsbehälter in der Arbeitsstellung über die Aufspannplatte reicht. Funkenerosionsmaschinen sind gewöhnlich mit einem C-Gestell versehen, und daher muß dieses C-Gestell um diesen Betrag höher sein als dasjenige bei einem Arbeitsbehälter mit beispielsweise Klapptüren oder Schiebetüren im Bereich einer einzelnen Behälterwand. Durch diese Erhöhung des C-Gestelles wird dessen Steifigkeit vermindert, oder bei angestrebter gleicher Steifigkeit ist ein größerer Ständerquerschnitt erforderlich. Da außerdem die Aufspannplatte von Säulen getragen sein muß, hat dieses zur Folge, daß die Aufspannplatte nachgiebiger ist als eine Aufspannplatte, die direkt auf dem Maschinenbett aufliegt. Der die einfache Zugänglichkeit und einfache Automatisierung betreffende Vorteil eines derartigen Hubbehälters, bei dem alle vier Wände zu einem Rahmen zusammengefaßt gemeinsam auf und ab bewegbar sind, wird somit durch die geringere Steifigkeit der Maschine in nachteiliger Weise überkompensiert.

Die der Erfindung zugrunde liegende Aufgabe besteht darin, eine Funkenerosionsmaschine insbesondere im Bereich des Arbeitsbehälters so zu gestalten, daß einerseits eine freie Zugänglichkeit gewährleistet und Automatisierungsbestrebungen berücksichtigt sind, während andererseits auch die Maschinensteifigkeit nicht in nachteiliger Weise beeinflußt ist.

Hinsichtlich der Maschinensteifigkeit ist zu berücksichtigen, daß Funkenerosionsmaschinen um so genauer arbeiten, je steifer ihre Gestelle und Eigenfrequenzen der Teile sind, die Werkzeug und Werkstück tragen. Diese Eigenschaften werden begünstigt durch eine möglichst gedrungene Bauart, die mit der Erfindung zu erreichen ist.

Die Lösung dieser Aufgabe besteht darin, daß die vertikale Vorderwand des Maschinenständers zugleich ein feststehendes Wandteil des Arbeitsbehälters bildet und die übrigen Wandteile beweglich und nach unten verschiebbar oder seitlich wegklappbar sind, wobei die Fugen zwischen den feststehenden und beweglichen Wandteilen des Arbeitsbehälters und der Aufspannplatte mit Dichtungen versehen sind, die vorzugsweise in Form von Blähdichtungen gestaltet sind.

Da die Aufspannplatte direkt auf dem Maschinenbett aufliegt, entspricht die Höhe des C-Gestells der Höhe von Maschinen, bei denen die Arbeitsbehälter Klapptüren oder nur eine Behälterwand abdeckende Schiebetüren haben, und ferner ist infolge des dreiseitigen Öffnens des Arbeitsbehälters eine optimale Zugänglichkeit zur Arbeitsstelle ermöglicht.

Durch die DE-A-2 514 899 (Bock) ist bei einer nicht gattungsgemäßen Funkenerosionsmaschine der Vorschlag bekanntgeworden, an einem höhen- und/oder seitenverstellbaren Werktisch eine damit fest verbundene vertikale Führungsplatte anzuordnen, welche den Werktisch nach oben und unten wenigstens annähernd um Beckenhöhe überragt und an welcher das aus zwei Seitenwänden, einer Vorderwand und einem Boden bestehende Dielektrikum-Arbeitsbecken höhenverstellbar geführt ist, wobei die Führungsplatte zugleich die Rückwand bildet. Dabei ist vorzugsweise die Führungsplatte zwischen dem gegebenenfalls höhenverstellbaren Horizontalschlitten und dem Werktisch angeordnet, und es kann ferner unterhalb des Werktischs ein Vorratstank angeordnet sein.

Bei dieser Maschine soll ebenfalls eine bessere Zugänglichkeit des Werktisches bzw. der Aufspannplatte ermöglicht werden. Es wurde zwar erkannt, daß die allseitige freie Zugänglichkeit bei einer bekannten Anordnung der Aufspannplatte auf einer Tragsäule im Maschinensockel erreicht wird, und daß dieser Vorteil jedoch mit ganz erheblichen Nachteilen behaftet ist, nämlich der mangelnden Starrheit und Schwingungsfestigkeit dieser Konstruktion. Dem genannten älteren Vorschlag zur Erzielung einer guten Zugänglichkeit haften jedoch dieselben Nachteile der mangelnden kompakten Bauweise an, so daß ebenfalls eine höchstmögliche Starrheit und Schwingungsfreiheit nicht erreichbar ist. Das C-Gestell hat eine sehr weite Ausladung vom Sockel 1 bis zum Maschinenkopf 3. Diese kann auch dann nicht bedeutend und daher stabilisierend wirksam durch Fortlassen des Vorratstanks verkürzt werden, weil die Abstützung des Aufspanntisches und der Boden des Beckens im Wege stehen.

Eine die freie Zugänglichkeit der Aufspannplatte und zugleich eine höchstmögliche Starrheit und Schwingungsfreiheit des C-Gestells wird bei einer derartigen Funkenerosionsmaschine erstmals durch die erfindungsgemäße Ausbildungsweise erreicht.

In einer bevorzugten Ausführung ist die erfindungsgemäße Gestaltung so getroffen, daß die übrigen Wandteile eine zusammengefaßte bauliche Einheit bilden und relativ zum feststehenden Wandteil und zur Aufspannplatte vertikal bewegbar und diese nach drei Seiten hin freilegend mindestens bis zum Niveau der Aufspannfläche absenkbar sind.

Diese Ausführung hat den Vorteil, daß ein zusätzlicher Platzbedarf für den Schwenkbereich der seitlichen Wandteile nicht erforderlich ist. Dabei können die eine bauliche Einheit bildenden Wandteile z. B. Vorder- und Seitenwände des Arbeitsbehälters in verschiedenen Höhenstellungen stufenlos verstellbar und arretierbar sein.

In Abwandlung hiervon können auch die übrigen Wandteile als eine bauliche Einheit oder in mehrere bauliche Einheiten unterteilt seitlich wegklappbar sein.

Vorzugsweise sind nach einem weiteren Merkmal der Erfindung die als bauliche Einheit vertikal beweglichen Wandteile in mit Dichtungen versehenen Geradführungen verschiebbar, die sich am Maschinenständer beidseitig des feststehenden Wandteils befinden.

Um eine betriebssichere Abdichtung der Behälterwandteile zu gewährleisten, wird ferner vorgeschlagen, daß die Wangen der Geradführungen mit einer oder mehreren Nuten zur Aufnahme von Dichtleisten versehen sind, und daß die zur Aufnahme von Dichtleisten vorgesehenen Nuten der Fußkontur des Behälters folgend und den Aufspanntisch umfassend zur ununterbrochenen Abdichtung der abgesenkten Behälteraußenwand ausgebildet sind.

Die Erfindung wird im folgenden anhand der Zeichnung näher beschrieben. Es zeigen:

Fig. 1   eine schematische perspektivische Darstellung der erfindungsgemäßen Funkenerosionsmaschine;

Fig. 2   in der Vergrößerung eine schematische perspektivische Ansicht des eigentlichen Arbeitsbehälters mit innerhalb des Arbeitsbehälters befindlicher Aufspannplatte;

Fig. 3 und 4   Schemadarstellungen von gegenüber Fig. 1 und 2 abgewandelten Arbeitsbehälter-Ausführungen nach der Erfindung;

Fig. 5 und 6   schematische Gegenüberstellungen der erfindungsgemäßen Maschine (Fig. 6) und einer Funkenerosionsmaschine (Fig. 5) mit einer Arbeitsbehälter-Ausführung nach dem Stand der Technik.

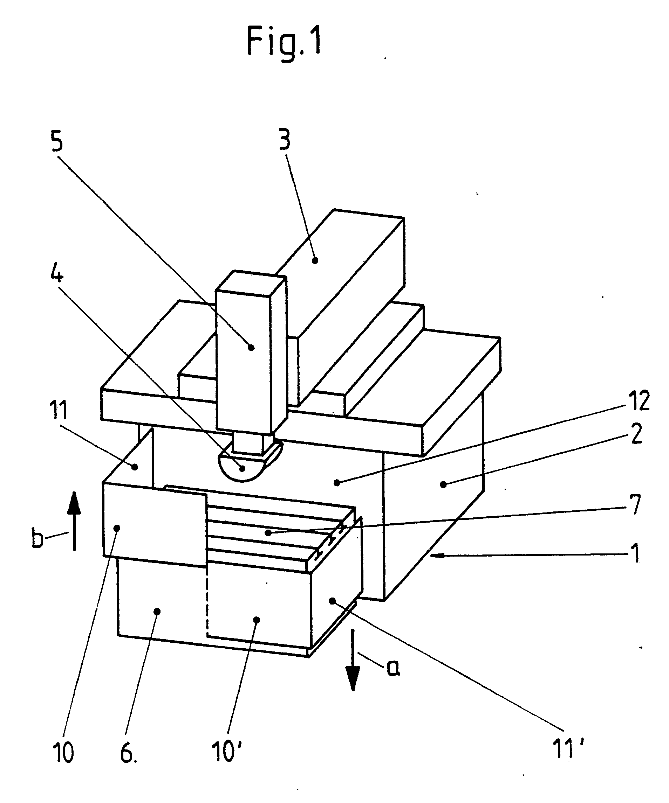

Figur 1 zeigt eine Funkenerosionsmaschine mit einem C-förmigen Gestell 1, welches einen Vertikalständer 2, einen oberen Schenkel 3 mit die Werkzeugelektrode 4 tragender Vorschubeinrichtung 5 und einen unteren Schenkel 6 umfaßt, der im wesentlichen das Maschinenbett bildet, das die Aufspannplatte 7 für ein nicht dargestelltes Werkstück trägt. Von dem Arbeitsbehälter sind die Vorderwand 10, 10' und die beiden seitlichen Wandteile 11, 11' als Einheit zusammengefaßt relativ zur stationären, durch die vordere Wand des Vertikalständers 2 gebildeten Behälterrückwand 12 und der Aufspannplatte 7 bzw. dem Maschinenbett 6 in vertikaler Richtung gemäß den Pfeilen a und b auf und ab bewegbar.

In Figur 1 ist die aus drei rechteckig zueinander stehenden Wandteilen bestehende bauliche Einheit links in der oberen Stellung und rechts in der unteren Stellung gezeigt. Bei nach unten abgesenkter "Dreiseitenhubtür" ist die Zugänglichkeit zur Arbeitsstelle optimal. Zum Freigeben des Werkstückes bzw. der Arbeitsstelle ist nur eine Bewegungsrichtung der "Dreiseitenhubtür" notwendig, d.h. die Tür wird nach unten abgesenkt, was die Automatisierungsmöglichkeiten vereinfacht. Weitere Vorteile bestehen darin, daß die nach unten abgesenkte "Dreiseitenhubtür" keinen zusätzlichen Raum in Anspruch nimmt und ferner, daß das Maschinengestell mit geringem Materialaufwand steif gehalten werden kann, da der Abstand zwischen dem Maschinenbett und dem oberen Schenkel 3 kurz ist.

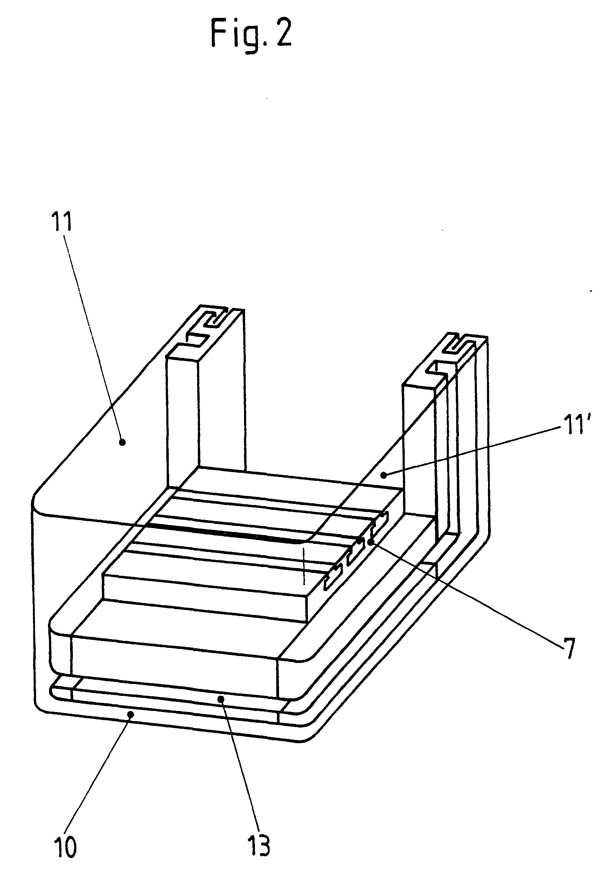

Figur 2 zeigt in vergrößerter Darstellung den erfindungsgemäß gestalteten Arbeitsbehälter, mit seiner durch die Vorderwand 10 und die beiden Seitenwände 11, 11' gebildeten Dreiseitenhubtür. Um den oberen Rand des die Aufspannplatte 7 tragenden Maschinentisches läuft an drei Seiten eine Nut 13, die an der Ständerseite beidseitig nach oben geführt ist. Die Nut dient zur Aufnahme von Dichtungselementen, die vorzugsweise in Form von Blähdichtungen gestaltet sind. Ist eine derartige Blähdichtung beaufschlagt, so schließt sie den Spalt zwischen beweglichen und stationären Teilen des Arbeitsbehälters, wobei die Dreiseitenhubtür gleichzeitig in Führungsnuten am Ständer festgehalten wird. Zum Verschieben der Dreiseitenhubtür wird die Blähdichtung entlastet und dann, wenn die Dreiseitenhubtür ihre gewünschte Höhenstellung einnimmt, wieder beaufschlagt, wodurch die Dreiseitenhubtür in jeder beliebigen Höhe stufenlos eingestellt werden kann.

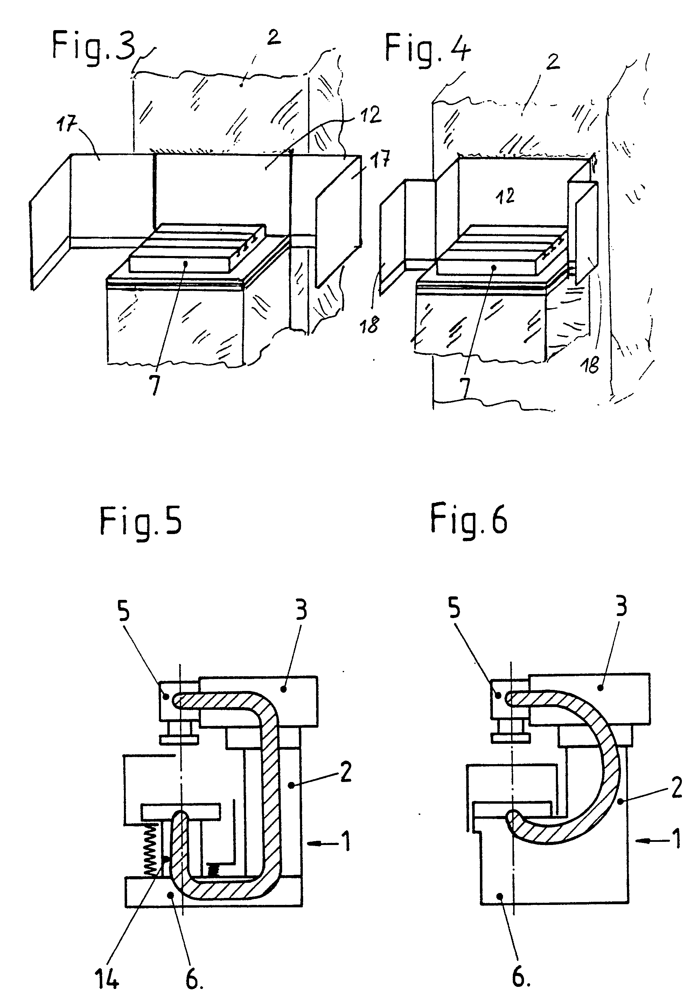

Die Figuren 3 und 4 zeigen in Abwandlung von der Gestaltung des Arbeitsbehälters Ausführungsformen mit seitlich wegschwenkbaren Wandteilen.

Die vergleichenden Darstellungen gemäß den Figuren 5 und 6 zeigen, daß bei der erfindungsgemäßen Ausführungsform gemäß Figur 6 der Abstand zwischen den durch den unteren Schenkel 6 des C-Gestells 1 gebildeten Maschinenbettes und dem die Vorschubeinrichtung 5 tragenden oberen Schenkel 3 bei weitem kleiner gehalten ist als bei einer bekannten Funkenerosionsmaschine mit insgesamt absenkbaren Arbeitsbehälter, welcher eine zusätzliche Säule 14 erforderlich macht.

Die beschriebene und in der Zeichnung dargestellte "Dreiseitenhubtür" kann, ohne den Rahmen der Erfindung zu verlassen, auch eine andere Form haben, z. B. eine Kreisbogenform oder eine teilelliptische Form.

**Patentansprüche**

1. Funkenerosionsmaschine mit einem C-förmigen Maschinengestell, bestehend aus einem vertikalen Maschinenständer (2), einem oberen Schenkel (3) mit einer eine Werkzeugelektrode (4) tragenden Vorschubeinrichtung (5) und einem unteren, das Maschinenbett bildenden Schenkel (6) sowie einer direkt auf dem Maschinenbett aufliegenden Aufspannplatte (7) für das Werkstück, welche von einem offenen, mit einer dielektrischen Flüssigkeit befüllbaren Arbeitsbehälter umgeben ist,
dadurch gekennzeichnet,
daß die vertikale Vorderwand (12) des Maschinenständers (2) zugleich ein feststehendes Wandteil des Arbeitsbehälters bildet und die übrigen Wandteile (10, 11, 17, 18) beweglich und nach unten verschiebbar oder seitlich wegklappbar sind, wobei die Fugen zwischen den feststehenden (12) und beweglichen Wandteilen (10, 11, 17, 18) des Arbeitsbehälters und der Aufspannplatte (7) mit Dichtungen versehen sind, die vorzugsweise in Form von Blähdichtungen gestaltet sind.

2. Funkenerosionsmaschine nach Anspruch 1, dadurch gekennzeichnet, daß die beweglichen Wandteile (10, 11) eine zusammengefaßte bauliche Einheit bilden und relativ zum feststehenden Wandteil (12) und zur Aufspannplatte (7) vertikal bewegbar und diese nach drei Seiten hin freilegend mindestens bis zum Niveau der Aufspannfläche absenkbar sind.

3. Funkenerosionsmaschine nach Anspruch 2, dadurch gekennzeichnet, daß die beweglichen eine bauliche Einheit bildenden Wandteile (10, 11) in verschiedenen Höhenstellungen stufenlos verstellbar und arretierbar sind.

4. Funkenerosionsmaschine nach Anspruch 1, dadurch gekennzeichnet, daß die beweglichen Wandteile (17, 18) als eine bauliche Einheit oder in mehrere bauliche Einheiten unterteilt seitlich wegklappbar sind.

5. Funkenerosionsmaschine nach den Ansprüchen 1 bis 3, dadurch gekennzeichnet, daß die beweglichen als bauliche Einheit vertikal bewegbaren Wandteile (10, 11) in Geradführungen verschiebbar sind, die sich am Maschinenständer (2) beidseitig des feststehenden Wandteils (12) befinden.

6. Funkenerosionsmaschine nach einem oder mehreren der Ansprüche 1 bis 5, dadurch gekennzeichnet, daß die Wangen der Geradführungen mit einer oder mehreren Nuten zur Aufnahme von Dichtleisten versehen sind.

EP 0 123 792 B1

7

8

7. Funkenerosionsmaschine nach einem oder mehreren der Ansprüche 1 bis 6,

dadurch gekennzeichnet,

daß zur Aufnahme von Dichtleisten Nuten (13) vorgesehen sind, die der Fußkontur des Behälters folgend und die Aufspannplatte (7) umfassend zur ununterbrochenen Abdichtung der beweglichen Behälteraußenwand (10, 11, 17, 18) gegenüber den feststehenden Teilen ausgebildet sind.

**Claims**

1. Electric discharge machine with a C-shaped frame comprising a vertical column (2), an upper support (3) with a feeder (5) carrying an electrode (4) and a lower support (6) forming the machine bed, as well as a workpiece clamping plate (7) directly lodged on the machine bed and surrounded by an open tank which can be filled with a dielectric liquid

characterized in that

the vertical front wall (12) of the vertical column (2) forms at the same time a stationary part of the wall of the tank and the remaining elements of the wall (10, 11, 17, 18) are movable and downwards displaceable or laterally reversible, the joints between the stationary parts (12) and the movable elements of the wall (10, 11, 17, 18) of the tank and the clamping plate (7) being provided with packings which are preferably designed as swelling components.

2. Electric discharge machine according to claim 1,

characterized in that

the movable wall elements (10, 11) form one constructional unit and, related to the stationary part of the wall (12) and to the clamping plate (7), they are vertically movable and can be lowered at least down to the level of the surface of the clamping plate, exposing it, during the downward movement, to three sides.

3. Electric discharge machine according to claim 2,

characterized in that

the movable wall elements (10, 11) forming a constructional unit are continuously adjustable and lockable at different positions of height.

4. Electric discharge machine according to claim 1,

characterized in that

the movable wall elements (17, 18) are laterally reversible as a single constructional unit or split up into several constructional units.

5. Electric discharge machine according to claims 1 to 3,

characterized in that

the movable wall elements (10, 11) vertically displaceable as a constructional unit can be shifted in slide guides located at the vertical column (2), on both sides of the stationary part of the wall (12).

6. Electric discharge machine according to one or several of the claims 1 to 5,

characterized in that

the flanges of the slide guides are provided with one or several grooves to receive packing strips.

7. Electric discharge machine according to one or several of the claims 1 to 6,

characterized in that

for the reception of packing strips grooves (13) are provided which, following the outlines of the bottom of the tank and embracing the clamping plate (7), have been designed for the uninterrupted sealing between the movable outside wall of the tank (10, 11, 17, 18) and the stationary parts.

**Revendications**

1. Machine d'érosion électrique avec un bâti sous forme d'un C comprenant un montant vertical (2), une traverse supérieure (3) munie d'un avanceur (5) portant une électrode (4), une traverse inférieure (6) formant le banc, et une plaque de fixation (7) pour la pièce à usiner, plaque directement supportée par le banc et entourée d'un récipient ouvert en haut qui peut être rempli d'un liquide diélectrique, dûment

caractérisée par le fait

que la paroi avant verticale (12) du montant vertical (2) forme en même temps un élément de paroi stationnaire du récipient et que les autres éléments de paroi (10, 11, 17, 18) sont mobiles et déplaçables vers le bas ou latéralement rabattables, les jointures entre les éléments de paroi stationnaires (12) et les éléments de paroi mobiles (10, 11, 17, 18) du récipient et de la plaque de fixation (7) étant pourvus de garnitures, préférablement sous forme de garnitures de gonflement.

2. Machine d'érosion électrique selon revendication 1, dûment

caractérisée par le fait

que les éléments de paroi mobiles (10, 11) forment un ensemble constructif et qu'il sont, référés à l'élément de paroi stationnaire (12) et à la plaque de fixation (7), verticalment mobiles et abaissables au moins jusqu'au niveau de la plaque de fixation, exposant cette dernière pendant ce mouvment vers trois côtés.

3. Machine d'érosion électrique selon revendication 2, dûment caractérisée par le fait

que les éléments de paroi mobiles (10, 11) qui forment un ensemble constructif, peuvent être ajustés sans intervalles et fixés à différentes positions de hauteur.

4. Machine d'érosion électrique selon revendication 1, dûment

caractérisée par le fait

que les éléments de paroi mobiles (17, 18) sont latéralement rabattables en tant qu'un seul ensemble constructif ou divisés en plusieurs ensembles constructifs.

5. Machine d'érosion électrique selon

5

revendication 1 à 3, dûment caractérisée par le fait que les éléments de paroi mobiles (10, 11), verticalment déplaçable comme ensemble constructif, glissent dans des guides se trouvant au montant vertical (2), des deux côtés de l'élément de paroi stationnaire (12).

6. Machine d'érosion électrique selon une ou plusieurs des revendications 1 à 5, dûment caractérisée par le fait que les jumelles de guide sont dotées d'une seule ou de plusieurs rainures pour recevoir des garnitures sous forme de languette.

7. Machine d'érosion électrique selon une ou plusieurs des revendications 1 à 6, dûment caractérisée par le fait que pour recevoir des garnitures sous forme de languette, sont prévus des rainures (13) qui, suivant le contour inférieur du récipient, et entourant la plaque de fixation (7) sont realisées pour assurer l'étanchéité continue entre la paroi de récipient extérieure mobile (10, 11, 17, 18) et les éléments stationnaire.

# Fig.1

# Fig. 2

Fig.3

Fig.4

Fig.5

Fig.6